Europäisches Patentamt

(19) European Patent Office

Office européen des brevets

(11) Veröffentlichungsnummer: **0 144 495**

**A1**

(12) # EUROPÄISCHE PATENTANMELDUNG

(21) Anmeldenummer: **84105681.5**

(22) Anmeldetag: **18.05.84**

(51) Int. Cl.⁴: **B 29 B 17/02**
**C 08 J 11/06**

(30) Priorität: **07.09.83 DE 3332278**

(43) Veröffentlichungstag der Anmeldung:
**19.06.85 Patentblatt 85/25**

(84) Benannte Vertragsstaaten:
**AT BE CH DE FR GB IT LI LU NL SE**

(71) Anmelder: **Bücheler, Eberhard**
**Am Bord 1**
**D-7760 Radolfzell(DE)**

(72) Erfinder: **Bücheler, Eberhard**
**Am Bord 1**
**D-7760 Radolfzell(DE)**

(74) Vertreter: **Riebling, Günter, Dr. et al,**
**Patentanwälte Dr.-Ing., Dipl.-Ing., Ing.(grad) Günter**
**Riebling Dr.-Ing., Dipl.-Ing. Peter Riebling Rennerle 10**
**Postfach 3160**
**D-8990 Lindau (Bodensee)(DE)**

(54) **Arbeitsverfahren zur Trennung von thermoplastischem Kunststoffmaterial von Beimengungen und Vorrichtung zur Ausübung des Arbeitsverfahrens.**

(57) Die Erfindung bezieht sich auf ein Arbeitsverfahren und eine Vorrichtung zur Trennung von thermoplastischem Kunststoffmaterial, welches durch metallische und/oder nichtmetallische Beimengungen verunreinigt ist. Die Aufgabe, nämlich die Trennung von thermoplastischen Kunststoffen, die durch metallische und/oder nichtmetallische Beimengungen verunreinigt wurden, wird gemäß der Erfindung durch folgende Verfahrensschritte gelöst:

1. Das verunreinigte Kunststoffmaterial wird in einem Extruder plastifiziert und zu einer Druckkammer (2) gefördert. Anschließend in der Druckkammer (2) wird das plastifizierte Material, während es an den Siebbohrungen (3) senkrecht zu deren Mittellinien vorbeitransportiert wird, unterteilt in aus den Siebbohrungen (3) austretenden, gereinigten Kunststoffmaterial und weiter zu transportierenden Beimengungen.

2. Schließlich wird am Ende der Druckkammer (2) dafür gesorgt, daß die sich sammelnden Beimengungen (8) zusammengepreßt und in zeitlichen Abständen entnommen werden.

Für die Vorrichtung ist es wichtig, daß die Wandung in der Druckkammer (2) sich nach dem Auslaß hin konisch verjüngt. Auch die Siebbohrungen (3) sind so ausgebildet, daß sie sich nach ihrem Auslaß hin konisch vergrößern.

./...

-2-

Die Erfindung bezieht sich auf ein Arbeitsverfahren zur Trennung von thermoplastischem Kunststoffmaterial, welches durch metallische und/oder nichtmetallische Beimengungen verunreinigt ist.

Derartiges Kunststoffmaterial fällt in großen Mengen an bei der Wiederaufbereitung von Verpackungsmaterialien, z.B. Joghurtbecher, bei Verpackungsfolien, Tragetaschen, beim Anfahren von der Produktion von beschichteten Materialien, von Ausschußmaterialien usw..

Bei den bisherigen bekannten Verfahren und Vorrichtungen wurde das mit Beimengungen verunreinigte, thermoplastische Material erhitzt und mit einem Kolben durch ein Sieb gedrückt. Es sind auch andere Verfahren bekannt. Nachteil dieser ganzen Verfahren ist es immer, daß der Abtransport der Beimengungen schwierig ist. Man muß das aufzubereitende Material unter Druck und Wärme setzen. Es besitzt aber eine hohe Viskosität und im Laufe der Aufbereitung wird der Anteil der Beimengungen immer größer, das dünnflüssige Material hat einen immer geringeren Anteil und damit müssen die Bearbeitungsdrücke immer größer werden. Das ergibt einen hohen Verschleiß bei den Maschinen, z.B. der Siebe und der Kolben und das Verfahren selbst arbeitet wenig wirtschaftlich, weil es nicht kontinuierlich durchführbar ist, es müssen dann immer Siebe gereinigt werden, Beimengungen extra entfernt werden, so daß größere Pausen bei der Bearbeitung auftreten. Insgesamt sind die bekannten Verfahren demzufolge mit ihren Vorrichtungen nicht sehr wirtschaftlich, weil die Vorrichtungen rasch verschleißen, sie unterliegen sehr hohen Druckbeanspruchungen und bezogen auf das wiederaufzubereitende Material ist auch der Rückgewinnungsgrad nicht hoch genug, d.h. die abzutransportierenden Verunreinigungen haben noch relativ viel brauchbares Material eingeschlossen.

Aufgabe der Erfindung ist es, hier Abhilfe zu schaffen und das Verfahren so auszubilden, daß mit einem viel geringeren und kürzeren Arbeitsaufwand mit wirtschaftlicher arbeitenden und billiger herzustellenden Maschinen ein Reinigungsgrad erreicht wird, wie er bisher nicht möglich war.

Die Aufgabe, nämlich die Trennung von thermoplastischen Kunststoffen, die durch metallische und/oder nichtmetallische Beimengungen verunreinigt wurden, wird gemäss der Erfindung durch folgende Verfahrensschritte gelöst:

1. Das verunreinigte Kunststoffmaterial wird in einem Extruder plastifiziert und zu einer Druckkammer gefördert. Anschließend in der Druckkammer wird das plastifizierte Material, während es an den Siebbohrungen senkrecht zu deren Mittellinien vorbeitransportiert wird, unterteilt in aus den Siebbohrungen austretendem, gereinigtem Kunststoffmaterial und weiter zu transportierenden Beimengungen.

2. Schließlich wird am Ende der Druckkammer dafür gesorgt, daß die sich sammelnden Beimengungen zusammengepresst und in zeitlichen Abständen entnommen werden.

Es wird hier also ein vollkommen neuer Weg beschritten, in dem zwei Ströme des Materials vorhanden sind, nämlich ein Strom des gereinigten Materials und ein in letzten Endes in einer anderen Richtung fließenden Strom der Beimengungen.

Wesentlich bei diesem Arbeitsverfahren ist, daß in der Druckkammer das plastifizierte Material kontinuierlich durch Druck Siebbohrungen zugeführt wird, bis es an einen Auslaß gelangt.

-4-

Diese Siebbohrungen sorgen dafür, daß Material noch einer Staukammer zugeführt werden kann und dieses Material dann im Kreislauf sich bewegt, mehrmals die Siebstrecke durchläuft.

Hier liegt die große Arbeitsersparnis und die viel wirtschaftlichere Bedeutung des Verfahrens. Bei allen bekannten Verfahren ist ein Rücklauf nicht vorgesehen. Bei diesen neuen Verfahren ist aber ein Rücklauf entlang der Reinigungsstrecke vorgesehen und am Ende der Reinigungsstrecke der Anteil des thermoplastischen Materials im Verhältnis zu den Beimengungen sehr gering, während er am Anfang dieser Reinigungsstrecke sehr viel größer ist.

Dieses kontinuierliche Arbeitsverfahren entlang einer Reinigungsstrecke ergibt eine viel größere Ausbeute bei einem viel geringeren Arbeitsaufwand. Dadurch, daß man die Entnahmerichtung der Beimengungen senkrecht zu der Entnahmerichtung des wiedergewonnenen thermoplastischen Materials liegt, behindern sich diese beiden Ströme nicht, und man erreicht einen nicht gekannten Reinigungsgrad bei der Wiedergewinnung thermoplastischen Materials.

Eine bevorzugte Ausführung besteht darin, daß das plastifizierte Material während der Zuführung zu den Siebbohrungen in der Druckkammer zusätzlich im Kreislauf sich bewegend mehrmals die Siebstrecke durchläuft.

Eine zweckmässige Ausgestaltung des Verfahrens besteht darin, daß das vom Extruder in der Druckkammer eintretende Material in zwei Zuflußströme unterteilt ist, von denen der eine unmittelbar zu den Siebbohrungen und der andere über eine Staukammer zu den Siebbohrungen gelangt.

Mit diesen Maßnahmen erreicht man, daß sich immer ein
gewisses Gleichgewicht bzw. ein gewisser Druckausgleich
einstellt. Das zugeführte Material hat je nach dem
Strömungswiderstand die Möglichkeit, entweder über eine
Staukammer zu den Siebbohrungen zu gelangen, oder unmittelbar. Das ergibt wiederum eine viel geringere Belastung der Fördervorrichtung, da sich die Drücke selbst
entsprechend den Strömungswiderständen ausgleichen.
Durch eine derartige Staukammer findet ein Druckausgleich
der einzelnen Zweigströme vor den Siebbohrungen derart
statt, daß , wenn sich z.B. am Ende der Druckkammer der
Druck unverhältnismässig hoch aufbaut, gewissermaßen
Rückführungsbohrungen vorhanden sind und der Druck sich
dann so ausgleicht, daß Material dort zufließt, wo ein
geringerer Druck vorhanden ist. Infolgedessen ist während
des ganzen Arbeitsverfahrens annähernd der gleiche Druck,
der auf die Siebbohrungen wirkt, ganz gleich , ob sie
sich am Anfang oder am Ende der Druckkammer befinden,
vorhanden.

Die Beimengungen, die senkrecht zu den Mittellinien der
Siebbohrungen immer weitertransportiert werden, werden
dann am Ende der Druckkammer zusammengepresst und können
periodisch durch Öffnen eines Auslaßhahnes entnommen
werden.

Ein Ausführungsbeispiel zur Ausübung des Arbeitsverfahrens
besteht darin, daß in der Druckkammer eine Verteilerschnecke angeordnet ist und die Wandung der Druckkammer
Siebbohrungen aufweist.

Um günstige Strömungsverhältnisse zu schaffen, ist es
wichtig, daß die Wandung in der Druckkammer sich nach dem
Auslaß hin konisch verjüngt. Auch die Siebbohrungen sind
so ausgebildet, daß sie sich nach ihrem Auslaß hin konisch
vergrößern.

Wichtig ist, daß die Verteilerschnecke ein sägezahnartiges Schneidprofil aufweist und am Zahngrund Rückflußbohrungen vorhanden sind.

Das Schneidprofil schneidet gewissermassen an der Wandung, in der sich die Siebbohrungen befinden, dort verbleibendes Material weg und fördert es weiter, so daß die Siebbohrungen immer freigehalten werden. Wenn durch dieses Freischneiden innerhalb der Zähne sich ein höherer Druck aufbaut, dann sind am Zahngrund Rückflußbohrungen vorhanden, die dafür sorgen, daß eine Druckentlastung stattfindet, d.h. es ist immer dafür gesorgt, daß ein sehr geringer Zwischenraum zwischen dem Schneidprofil und der Zuführungsöffnung der Siebbohrung verbleibt. Demzufolge können nicht irgendwelche Beimengungen die Siebbohrung verstopfen, weil sie immer weggeschnitten werden.

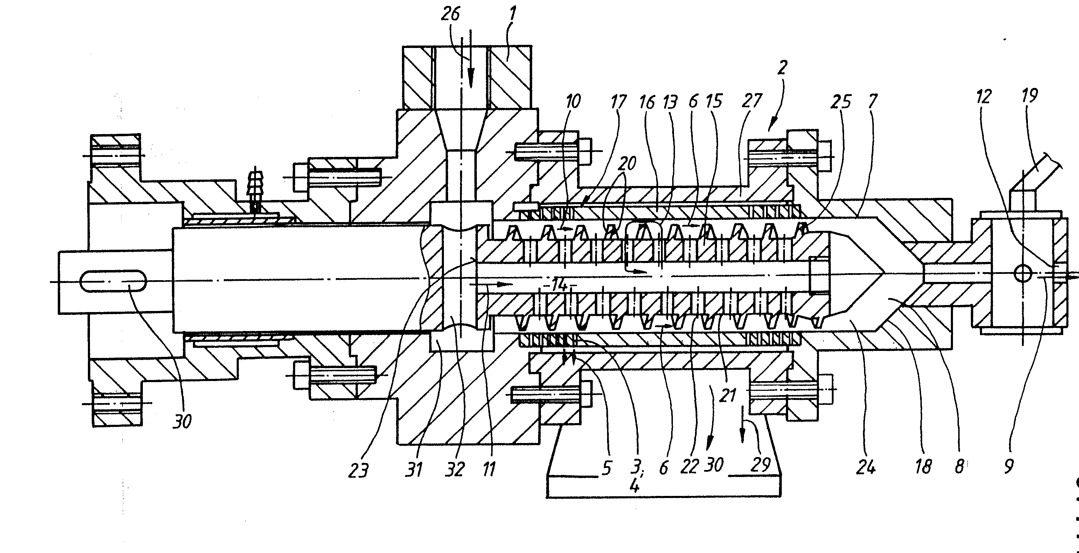

Ein Ausführungsbeispiel der Erfindung ist in der Zeichnung dargestellt; dabei gehen aus der Zeichnung und der Beschreibung weitere Erfindungsmerkmale hervor.

In der Zeichnung ist das Auslaßende eines Extruders 1 dargestellt. Der Extruder drückt in Pfeilrichtung 26 schon plastifiziertes, aufzubereitendes Material in die Vorrichtung. Dieses in Pfeilrichtung 26 ankommende Material kann sich je nach den Druckverhältnissen in der Druckkammer verteilen, und zwar strömt es entweder in Pfeilrichtung 11 in eine Staukammer 14, eine Verteilerschnecke 15 oder aber in Pfeilrichtung 10 entlang einer konisch verlaufenden Wandung 16, die von der Wandung 27 der Druckkammer 2 umgeben wird. Das in den Pfeilrichtungen 11 und 10 zufließende Material gelangt dann gereinigt in Pfeilrichtung 29 entweder in einen Sammelraum oder fließt unmittelbar hier ab, um sofort der weiteren Verarbeitung zugeführt zu werden. Das heisst, diese Vorrichtung kann unmittelbar in den Arbeitsgang anderer Produktionsmaschinen eingesetzt werden, denen thermoplastisches
Material zur Bearbeitung zugeführt wird. Die Beimengungen
gelangen in Pfeilrichtung 6 letzten Endes bis zu einem
Auslaß 12, dem sie in Pfeilrichtung 9 entnommen werden.

Die Vorrichtung arbeitet dann wie folgt:
In der Druckkammer 2 , die von der Wandung 27 umschlossen
ist, wird vom Extruder 1 ein bestimmter Arbeitsdruck aufrechterhalten. Die Verteilerschnecke 15 dient im wesentlichen der Verteilung des zugeführten Materials, dabei
sind in der Wandung 16 Siebbohrungen 3 eingebracht, deren
Mittellinie 4 senkrecht zur Förderrichtung 6 der Beimengungen liegt. In Pfeilrichtung 5 tritt dann das wieder
zu verarbeitende relativ dünnflüssige Material aus,
wobei die Pfeilrichtung 30 die Gesamtheit des ganzen
austretenden gereinigten Materials angibt. Am Ende 7
der Druckkammer sind dann unter dem Druck des Extruders
stehend die Beimengungen 8, die jetzt fast ausschließlich
aus Metall oder ähnlichem bestehen, zusammengepresst.
Die Verteilerschnecke kann auch einen gewissen Druck auf
diese Beimengungen 8 ausüben, weil am Ende der Verteilerschnecke der Anteil der Beimengungen mit hoher Viskosität sehr viel größer ist als das ausgepresste und durch
die Siebbohrungen gedrückte thermoplastische Material
mit sehr viel geringerer Viskosität. Es tritt also dann
eine gewisse Dichtwirkung zwischen der Wandung 6 und
dem Schneidprofil 20 der Zähne der Verteilerschnecke auf.

Je nach den Druckverhältnissen zwischen der Staukammer 14
und den Zahnlücken der Verteilerschnecke bilden sich
Kreisläufe in Pfeilrichtung 13 des Materials . Ist der
Druck der Staukammer 14 größer als innerhalb des Zahngrundes 21, dann fließt das Material in Pfeilrichtung 13, gelangt wieder in den Bereich der Siebbohrungen und wird
dann dort wieder in zwei Ströme aufgeteilt, nämlich den
einen in Pfeilrichtung 6 für die Beimengungen, und den
anderen in Pfeilrichtung 5 für das austretende Material.

Der Auslaß 17 der Siebbohrungen ist konisch erweitert
entsprechend den Strömungsverhältnissen. Diese Erweiterung ist deswegen erforderlich, wenn irgendwelche
Verunreinigungen in einer der Siebbohrungen hängenbleibt,
wird dann durch daraufeinwirkenden Druck das Loch gereinigt.

Die Verunreinigung selbst können kontinuierlich durch
Öffnen eines Auslaßventils 19 aus dem Auslaß 12 in
Pfeilrichtung 9 entnommen werden. Die Rückflußbohrungen
22 sind so bemessen, wie es die Druckverhältnisse erfordern. Sie können über die ganze Verteilerschnecke hin
gleichmässig sein, sie können aber auch nach dem Ende
hin sich vergrößern. Auf jeden Fall kann man diese Bohrungen so wählen, daß die Verteilerschnecke entlang ihrer
ganzen Länge einem gleichmässigen Druck ausgesetzt ist;
sie wird sogar gewissermassen zentriert, weil von innen
und außen die Drücke sich ausgleichen. Es ist nur erforderlich, daß die Verteilerschnecke dann in einem Wiederlager gehaltert wird; angetrieben wird die Verteilerschnecke über ein nicht dargestelltes Getriebe an ihrer
Antriebsseite 30. Ein Sammelraum 31, der in Pfeilrichtung
26 vom Extruder 1 gefüllt wird, bringt dann das Material
über eine Bohrung 32 in der Verteilerschnecke zum Einlaß 23 bzw. unmittelbar in den Umfang der Verteilerschnecke, deren Gänge sich bis in den Vorratsraum erstrecken, was in der Zeichnung nicht dargestellt ist.

Der konische Kopf 24 am Ende der Verteilerschnecke 15
ist mit einer Verdickung 25 versehen, damit wird noch
eine besondere Komprimierung der Beimengungen 8 am Ende

-9-

der Druckkammer erreicht bzw. auch verhindert, daß etwa
diese Beimengungen wieder rückfließen können.

Als Anwendung der Erfindung sind alle Möglichkeiten zu
bezeichnen, bei denen man plastifizierendes Material in
einen Behandlungsraum zuführt, in dem sich ein Förderorgan befindet, welches längs und im Kreislauf das
Material an einem Sieb vorbeifördert, wobei dieses Sieb
stehend oder rotierend ausgebildet sein kann und
was das wesentlichste ist, die Anordnung so getroffen
ist, daß die Förderrichtung der Beimengungen letzten
Endes senkrecht zu dem Abfluß des plastifizierten
Materials vorhanden ist, wobei aber je nach Viskosität
im Anfang auch die Beimengungen noch mit im Kreislauf
geführt werden.

-10-

P a t e n t a n s p r ü c h e

1. Arbeitsverfahren zur Trennung von thermoplastischem Kunststoffmaterial, welches durch metallische und/oder nichtmetallische Beimengungen verunreinigt ist, gekennzeichnet durch folgende Verfahrensschritte .

1.1 das verunreinigte Kunststoffmaterial wird in einem Extruder (1) plastifiziert und zu einer Druckkammer (2) gefördert;

1.2 in der Druckkammer (2) wird das plastifizierte Material, während es an Siebbohrungen (3) senkrecht deren Mittellinie (4) vorbeitransportiert wird, unterteilt in aus den Siebbohrungen in Pfeilrichtung (5) austretenden , gereinigten Kunststoffmaterial und weiter in Pfeilrichtung (6) transportierten Beimengungen;

1.3 die am Ende (7) der Druckkammer sich sammelnden Beimengungen (8) werden zusammengepresst und in zeitlichen Abständen in Pfeilrichtung (9) entnommen.

2. Arbeitsverfahren nach Anspruch 1, d a d u r c h g e k e n n z e i c h n e t , daß in der Druckkammer (2) das plastifizierte Material kontinuierlich durch Druck Siebbohrungen in Pfeilrichtung (10) zugeführt wird, bis es an den Auslaß (12) gelangt.

3. Arbeitsverfahren nach Anspruch 1, d a d u r c h g e k e n n z e i c h n e t , daß das plastifizierte Material während der Zuführung zu den Siebbohrungen (3) in der Druckkammer (2) zusätzlich im Kreislauf in Pfeilrichtung (13) sich bewegend mehrmals die Siebstrecke durchläuft.

4. Arbeitsverfahren nach Anspruch 3, d a d u r c h
g e k e n n z e i c h n e t , daß die im Kreislauf liegenden Strömungswiderstände kleiner sind als die Strömungswiderstände der Siebbohrungen (3).

5. Arbeitsverfahren nach Anspruch 4, d a d u r c h
g e k e n n z e i c h n e t , daß das vom Extruder (1)
in die Druckkammer (2) eintretende Material in zwei
Zuflußströme (10,11) unterteilt ist, von denen der eine
unmittelbar zu den Siebbohrungen (3) und der andere über
eine Staukammer (14) zu den Siebbohrungen (3) gelangt.

6. Vorrichtung zur Ausübung des Arbeitsverfahrens nach
Anspruch 1 bis 5, d a d u r ch g e k e n n z e i c h -
n e t , daß in der Druckkammer (2) eine Verteilerschnecke
(15) angeordnet ist und die Wandung der Druckkammer (2)
Siebbohrungen (3) aufweist.

7. Vorrichtung zur Ausübung des Arbeitsverfahrens nach
Anspruch 6, d a d u r ch g e k e n n z e i c h n e t,
daß die Wandung (16) in der Druckkammer (2) sich nach dem
Auslaß (12) hin konisch verjüngt.

8. Vorrichtung zur Ausübung des Arbeitsverfahrens nach
Ansprüchen 1, 6 und 7, d a d u r c h g e k e n n -
z e i c h n e t , daß die Länge der Siebbohrungen (3)
ca. 3 bis 10 mal größer ist als der kleinste Bohrungsdurchmesser der Siebbohrung.

9. Vorrichtung zur Ausübung des Arbeitsverfahrens nach
Anspruch 8, d a d u r c h g e k e n n z e i c h n e t,
daß die Siebbohrung (3) sich nach ihrem Auslaß (17) hin
konisch vergrößert.

10. Vorrichtung zur Ausübung des Arbeitsverfahrens nach Anspruch 9, d a d u r c h   g e k e n n z e i c h n e t, daß das Ende (18) der Druckkammer (2) konisch verläuft und in ein Auslaßventil für die Beimengungen mündet.

11. Vorrichtung zur Ausübung des Arbeitsverfahrens nach Anspruch 1, d a d u r c h   g e k e n n z e i c h n e t, daß die Verteilerschnecke (15) ein sägezahnartiges Schneidprofil (20) aufweist und am Zahngrund (21) Rückflußbohrungen (12) vorhanden sind.

12. Vorrichtung zur Ausübung des Arbeitsverfahrens nach Anspruch 1, d a d u r c h   g e k e n n z e i c h n e t, daß die Rückflußbohrungen (12) in eine gemeinsame Staukammer (14), die sich innerhalb der Verteilerschnecke (15) befindet, münden.

13. Vorrichtung zur Ausübung des Arbeitsverfahrens nach Anspruch 12, d a d u r c h   g e k e n n z e i c h n e t, daß die Staukammer (14) eine konzentrische Bohrung in der Verteilerschnecke (15) ist.

14. Vorrichtung zur Ausübung des Arbeitsverfahrens nach Anspruch 13, d a d u r c h   g e k e n n z e i c h n e t, daß die Staukammer (14) eine mit dem Extruder (1) verbundene Einlaßöffnung (23) aufweist.

15. Vorrichtung zur Ausübung des Arbeitsverfahrens nach Anspruch 14, d a d u r c h   g e k e n n z e i c h - n e t ,  daß das in den konischen Auslaßteil (18) der Druckkammer (2) ragende Ende der Verteilerschnecke (15) einen nach außen hin sich verjüngenden konischen Kopf (24) aufweist.

16. Vorrichtung zur Ausübung des Arbeitsverfahrens nach Anspruch 15, d a d u r c h   g e k e n n z e i c h - n e t , daß der Übergang der Verteilerschnecke (15) zum konischen Kopf (24) eine Verdickung (25) aufweist.

1/1

0144495

**0144495**

Nummer der Anmeldung

Europäisches
Patentamt

## EUROPÄISCHER RECHERCHENBERICHT

| | EINSCHLÄGIGE DOKUMENTE | | EP 84105681.5 |
|---|---|---|---|
| **Kategorie** | **Kennzeichnung des Dokuments mit Angabe, soweit erforderlich, der maßgeblichen Teile** | **Betrifft Anspruch** | **KLASSIFIKATION DER ANMELDUNG (Int. Cl.4)** |
| X | US - A - 4 174 198 (KINOSHITA) <br> * Gesamt * | 1,2,6, 8,10, 15 | B 29 B 17/02 <br><br> C 08 J 11/06 |
| A | | 9 | |
| | -- | | |
| X | US - A - 4 177 234 (LOWRY) <br> * Gesamt * | 1,2,6, 8,10, 15 | |
| | -- | | |
| X | US - A - 1 724 967 (ROYLE) <br> * Gesamt * | 1,2,6 | |
| | -- | | |
| A | DD - A - 57 189 (RHONE-POULENC) <br> * Gesamt * | 1,2,6 | |
| | -- | | **RECHERCHIERTE SACHGEBIETE (Int. Cl.4)** |
| A | US - A - 1 716 696 (HIMROD) <br> * Gesamt * | | |
| | -- | | B 29 B <br> B 29 C <br> C 08 J |
| A | US - A - 1 964 681 (WILLIAMS) <br> * Gesamt * | | |
| | -- | | |
| A | US - A - 4 143 001 (RAAB) <br> * Gesamt * | | |
| | ---- | | |

Der vorliegende Recherchenbericht wurde für alle Patentansprüche erstellt.

| Recherchenort <br> WIEN | Abschlußdatum der Recherche <br> 20-02-1985 | Prüfer <br> REININGER |
|---|---|---|